# FASCICULE DE BREVET EUROPEEN

(11) **EP 1 049 262 B1**
(45) Date de publication et mention de la délivrance du brevet: **09.05.2007**
(21) Numéro de dépôt: 00401065.8
(22) Date de dépôt: 17.04.2000
(51) Int. Cl.: H04B 1/56, H02J 7/00

(54) **Procédé et dispositif d'alimentation électrique dans un appareil mobile**
Elektrische Versorgungseinrichtung und -verfahren für bewegliche Apparate
Method and device for electrical supply of a mobile apparatus

(30) Priorité: 26.04.1999 FR 9905241
(43) Date de publication de la demande: 02.11.2000
(73) Titulaire: Alcatel Lucent, 75008 Paris (FR)
(72) Inventeur: Lomba, Vincent, 92600 Asnieres sur Seine (FR); Rouverand, Christophe, 92600 Asnieres sur Seine (FR)
(74) Mandataire: Sciaux, Edmond

(56) Documents cités:
- EP-A- 0 387 108
- EP-A- 0 674 400
- GB-A- 2 328 844
- US-A- 5 208 494

## Description

La présente invention a pour objet un procédé et un dispositif d'alimentation électrique dans un appareil mobile, notamment d'alimentation électrique d'un circuit de traitement numérique, et en particulier dans un téléphone mobile. Le but de l'invention est de résoudre des problèmes d'alimentation qui se produisent dans les dispositifs portables, muni d'une batterie d'autonomie dont la tension chute peu à peu au cours de l'utilisation et dont la tension disponible peut descendre en dessous d'une valeur critique pour laquelle un fonctionnement des circuits numériques de l'appareil mobile, ou portable, n'est plus garanti.

Dans la téléphonie mobile, et plus généralement dans les appareils portables, une batterie fournissant une tension d'alimentation utile Vu est reliée à des circuits de traitement numérique par l'intermédiaire d'un circuit de régulation. Cette batterie peut par ailleurs être reliée à d'autres circuits directement, si pour ces autres circuits la valeur d'alimentation n'a pas besoin d'être régulée. Le principe d'un circuit de régulation consiste à prévoir un écart de tension entre la tension disponible aux bornes de la batterie et une tension plus faible disponible en sortie du circuit de régulation. L'asservissement, ou la régulation de la tension de sortie du circuit de régulation se réalise par la modulation de cet écart, plus la tension de batterie chute plus l'écart est réglé à une valeur faible.

Dans la pratique l'écart est obtenu au moyen d'une chute de tension dans un transistor, de type bipolaire ou de type à effet de champ (MOS) avec les conséquences suivantes. Lorsque la tension de batterie devient faible, et que l'écart, la tension émetteur collecteur ou la tension drain source respectivement, est limité, la polarisation du transistor impose que le courant de polarisation qui passe dans ce transistor soit important. On aboutit alors à un paradoxe que plus la batterie est déchargée, plus sa tension est faible, et plus il faut la faire débiter pour arriver à maintenir en sortie du circuit de régulation une tension d'alimentation satisfaisante. En outre dans ce cas, deuxième paradoxe, on arrive à consommer dans le circuit de régulation, pour la régulation de la tension, plus de courant que le circuit de traitement n'est susceptible d'en consommer lui-même. Le résultat d'une telle démarche est d'abréger rapidement le reste d'autonomie de l'appareil portable.

Une solution pour remédier en partie à ce problème consiste, au lieu d'augmenter le courant de polarisation, à prévoir des transistors plus gros. Indépendamment du fait que les transistors plus gros sont plus chers, ils occupent surtout plus de place sur un circuit intégré qui les comporte. Ceci est d'autant plus pénalisant qu'en général dans un appareil portable, de manière à administrer au plus juste la question des consommations, plusieurs circuits de régulation sont réalisés sur un même circuit intégré. L'occupation de surface nécessitée par les transistors jouant le rôle de ballast est alors rédhibitoire.

En outre lorsqu'une consommation électrique évolue brusquement, à une date donnée, le temps de montée du circuit de régulation est trop long. De sorte qu'on observe en sortie du circuit de régulation une évolution transitoire de la tension régulée au cours de laquelle celle-ci baisse d'abord puis dépasse la valeur de régulation avant de se stabiliser à cette dernière. La durée de cette réponse transitoire, notamment pendant la période de baisse peut être de l'ordre de 10 microsecondes. Dans un appareil portable, notamment dans un téléphone mobile, une horloge interne rapide, dans un exemple connu à 13 MHz, cadence les circuits numériques. Les 10 microsecondes de déficit de tension correspondent alors à plus d'une centaine de temps de cycle de ces circuits de traitement. Dans certaines situations, notamment lorsque la batterie approche de la fin de son autonomie, le démarrage des traitements qui impliquent un surcroît de consommation s'effectue alors dans de mauvaises conditions puisque pendant ces cycles d'horloge les circuits de traitement sont sous-alimentés.

Pour résoudre ce dernier problème, dans l'état de la technique on sait placer en entrée ou en sortie des circuits de régulation, mais de préférence en entrée, des gros condensateurs, par exemple de 3300 µF. L'inconvénient présenté par ces gros condensateurs est leur encombrement ainsi que leur prix et le coût des opérations nécessaires à leur installation dans l'appareil mobile. En outre, Lorsque divers circuits de traitement de signal d'un téléphone mobile sont utilisés simultanément, par exemple un circuit de reconnaissance vocale, un circuit d'annulation d'effets larsen ou autres, le gros condensateur finit par être déchargé de sorte que son utilité est inexistante au moment où on en a besoin.

On connaît également par le document EP-0 387 108 une solution pour éviter les effets néfastes du signal transitoire de tension. Selon l'enseignement de ce document, le circuit susceptible de créer un signal transitoire d'alimentation est déconnecté de la source de courant par l'ouverture d'un commutateur, les autres circuits étant alors alimentés à partir d'un moyen de stokage d'énergie situé entre le commutateur et les autres circuits.

L'invention a pour objet de remédier à ces problèmes et notamment d'éviter que la tension d'alimentation régulée ne devienne inférieure à une tension critique de fonctionnement, au moment où on commence à en avoir besoin. Dans l'invention, et en particulier dans les cas des téléphones mobiles de type GSM, on a remarqué que les dates auxquelles se produisent les augmentations d'alimentation électrique sont connues à l'avance. Tout simplement, dans la téléphonie mobile de type TDMA (Time Division Multiple Access, accès multiple à répartition dans le temps), les circuits d'un téléphone mobile ne sont sollicités que pendant une fenêtre temporelle d'une trame. Une telle fenêtre temporelle dont la durée est connue, dans un exemple de 577 microsecondes, se reproduit de trame en trame en respectant une synchronisation de trame. Il est donc possible de connaître exactement le début d'une telle fenêtre temporelle d'utilisation.

Dans l'invention, on fait en sorte que le phénomène transitoire du circuit de régulation se produise alors dans des conditions telles qu'il ne gêne pas, pendant la fenêtre temporelle utile, l'établissement d'une tension régulée à une valeur attendue. En pratique, par anticipation et avec une durée égale à la durée du transitoire, on provoque par déréglage de la régulation du circuit de régulation une précompensation de la chute de tension qui se produit immanquablement au moment où l'augmentation désirée de consommation électrique se produit. Dans le même esprit, avant une consommation utile on peut provoquer par anticipation une consommation du même ordre que la consommation utile de manière à ce que, dans ce cas, le transitoire se produise avant la durée utile de la fenêtre temporelle. Dans les deux cas on modifie par anticipation un mode de fonctionnement du circuit de régulation. On montrera par la suite que cette anticipation est de nature à neutraliser les effets néfastes d'un changement de mode brutal du circuit de régulation.

L'invention a donc pour objet un procédé d'alimentation électrique d'un circuit de traitement numérique dans un appareil mobile selon la revendication 1.

L'invention a également pour objet un appareil mobile muni d'un circuit de traitement numérique et d'un dispositif d'alimentation électrique de ce circuit de traitement numérique selon la revendication 5.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : des chronogrammes illustrant l'évolution temporelle de la tension d'alimentation d'un circuit de traitement numérique dans des cas ne comportant pas
ou comportant une régulation selon l'invention ;
- Figure 2 : une représentation schématique du circuit de régulation dans un appareil notamment un appareil portable muni d'une batterie.

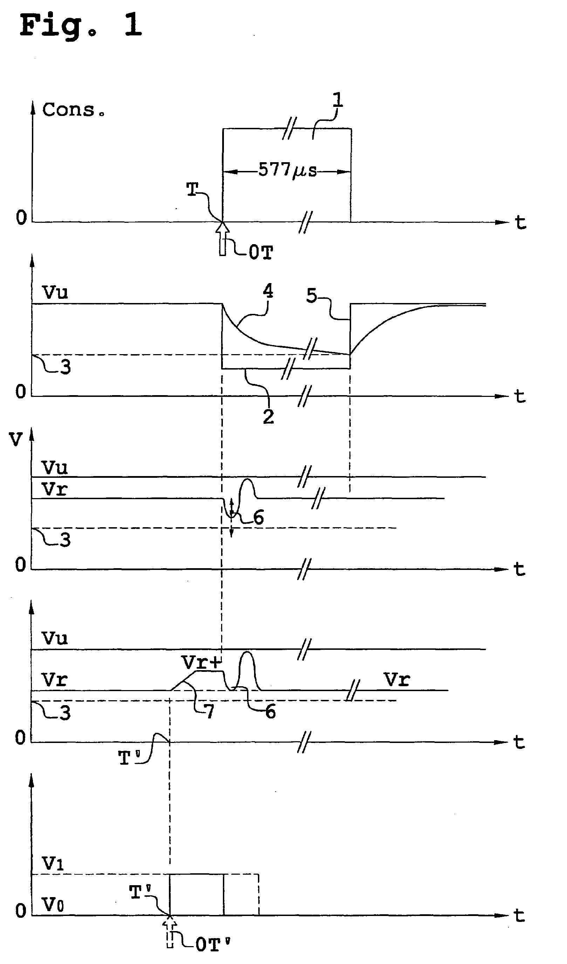

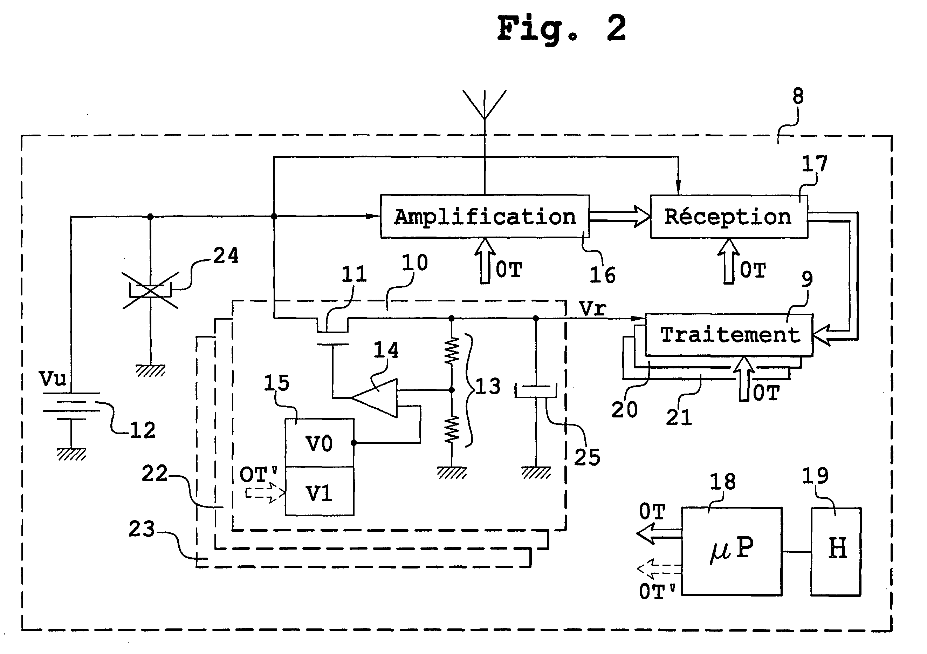

La figure 1 montre plusieurs diagrammes temporels. Le premier diagramme temporel montré est un diagramme temporel de consommation montrant que dans l'appareil concerné la consommation électrique subit une variation brutale au début d'une fenêtre temporelle 1 et que cette consommation reste à un niveau élevé pendant toute la durée de cette fenêtre temporelle. Dans le cadre de la téléphonie mobile de type TDMA, on peut considérer que la fenêtre temporelle 1 est celle pendant laquelle un téléphone mobile, au cours d'une trame est amené à transmettre les informations de communication à une station de base ou à recevoir des informations en provenance de celle-ci. En dehors de cette fenêtre temporelle on peut considérer que le circuit est mis au repos et par conséquent en dehors de cette fenêtre la consommation est quasiment nulle. Dans d'autres domaines d'appareils portables, notamment de micro-ordinateurs portables, si des variations brutales de consommation sont impliquées à des dates aléatoires (par exemple un accès à un disque dur) ces dates aléatoires sont cependant prévisibles. Au besoin on retarde leur mise en service pour disposer de l'anticipation nécessaire.

Le diagramme temporel situé en dessous du premier diagramme temporel montre une tension d'utilisation Vu disponible à la sortie d'une batterie. S'il n'y a pas de dispositif de régulation, pendant la période de la fenêtre temporelle 1 la tension disponible subit un affaiblissement brutal 2 pouvant amener une tension résiduelle à une valeur inférieure à une valeur 3 de seuil. Pour éviter une chute de tension liée à la résistance interne de la batterie, il est connu de placer en parallèle avec celle-ci des gros condensateurs provoquant une décharge lente 4 de la tension utilisable. Les condensateurs doivent être gros parce qu'en pratique la constante de temps qu'ils occasionnent avec la charge connectée à la batterie doit être supérieure à la durée de la fenêtre temporelle 1. Dans ces conditions on peut espérer qu'à la fin 5 de la fenêtre temporelle la tension d'alimentation n'est pas descendue en dessous du seuil 3.

En dessous de ce deuxième diagramme temporel est présenté un troisième diagramme temporel dans lequel une tension régulée Vr est inférieure à la tension utile Vu mais présente, notamment pendant la majeure partie de la durée de la fenêtre temporelle 1, une valeur régulée supérieure à la tension du seuil 3 minimal. On constate néanmoins sur ce troisième diagramme qu'au moment où la fenêtre temporelle 1 débute, le circuit de régulation est insuffisamment réactif et un phénomène transitoire 6 se produit. Ce phénomène 6 amène la tension Vr disponible en sortie du régulateur à tendre vers la valeur du seuil 3 voire dans les cas les plus critiques à y devenir inférieure. Dans un exemple, pour fixer les idées, la tension Vu de batterie vaut de l'ordre de 3,3 volts, la tension régulée Vr vaut dans un exemple préféré 2,8 volts le seuil 3 étant lui situé à 2,7 volts : tension au-delà de laquelle les circuits numériques n'ont plus un fonctionnement correct. La durée de l'impulsion négative 6 peut être de l'ordre de 10 microsecondes ce qui comme indiqué précédemment peut être rédhibitoire.

Dans l'invention on ne va pas véritablement empêcher l'existence du phénomène transitoire 6. En effet l'empêchement de ce phénomène reviendrait à vouloir polariser le circuit de régulation avec un courant de polarisation tel qu'il serait supérieur au courant que le circuit de régulation doit débiter. Par contre on a repéré, notamment dans le domaine de la téléphonie mobile de type TDMA, que la consommation de courant de la fenêtre temporelle 1 se produisait à une date T connue d'avance. En pratique, à cette date T les circuits de l'appareil portable reçoivent des ordres OT de mise en service, ce qui provoque justement l'augmentation de la consommation. Dans ces conditions, sachant que la date T est connue, on s'arrange dans l'invention pour modifier par anticipation le mode de fonctionnement du circuitde régulation. Dans la pratique deux solutions sont possibles.

Comme représenté d'une manière préférée sur un quatrième diagramme temporel de la figure 1 on modifie par anticipation la valeur de consigne de la tension régulée de manière à ce que celle-ci passe d'une valeur Vr à une valeur Vr+. L'anticipation se produit à partir d'une date T' en envoyant un ordre OT' pour modifier le mode de fonctionnement du circuit de régulation. Aussi à la date T, postérieure à la date T, le phénomène de mise en service de l'asservissement se produit à partir d'une tension régulée Vr+ supérieure, de manière à ce qu'en aucun cas une tension minimale résultant de cette mise en service ne franchisse la valeur du seuil 3. Entre les dates T' et T le circuit de régulation en pratique consomme plus de courant. En effet l'écart entre la tension Vu et la tension Vr+ est moins important que l'écart entre la tension Vu et la tension Vr. Néanmoins cette surconsommation n'est pas pénalisante ici dans le cas d'un appareil portable parce que la durée TT est faible. Dans un exemple cette durée est de l'ordre du transitoire 6, par exemple de l'ordre de 10 microsecondes. Elle peut être même inférieure, par exemple égale à la moitié de façon à permettre uniquement une montée 7 de la tension régulée, sans palier à la nouvelle valeur Vr+. En pratique l'ordre OT' visible sur un cinquième diagramme temporel peut être arrêté dès l'arrivée de l'ordre OT, ou éventuellement légèrement plus tard. Dans tous les cas on fera en sorte que pendant la majeure partie de la durée de la fenêtre temporelle 1 l'ordre OT' soit coupé de façon à ce que la tension régulée soit à nouveau Vr.

Dans l'invention, on repère donc temporellement la date T et on modifie par anticipation à la date T le mode de fonctionnement du circuitde régulation. On modifie en conséquence la valeur de référence de cet asservissement.

En variante, connaissant la date T à laquelle la consommation subit une variation brutale, il serait possible de provoquer une fausse consommation par anticipation dans les mêmes conditions avec un ordre OT' qui serait appliqué cette fois-ci, non plus sur une grandeur de consigne d'un asservissement, mais sur un circuit dissipatif annexe relié en sortie au régulateur. Dans ces conditions le transitoire 6 montré sur le troisième diagramme temporel, même s'il était amené à franchir la tension de seuil 3 ne serait pas pénalisant parce qu'il se produirait à une période pendant laquelle le circuit de traitement ne serait pas utilisé.

La figure 2 montre un appareil mobile 8 muni d'un circuit de traitement numérique 9 et d'un dispositif d'alimentation électrique du circuit de traitement 9. Un circuit de régulation 10 comporte un asservissement d'une tension d'alimentation Vr de ce circuit de traitement à une valeur de référence V0. L'asservissement dans un exemple comporte un transistor 11 dans un exemple de type MOS, relié à une batterie 12 d'une part et au circuit de traitement 9 d'autre part. La tension Vr est mesurée par un pont diviseur 13 dont un curseur est relié à une première entrée d'un circuit comparateur 14. Le circuit comparateur 14 reçoit sur une autre entrée un signal de consigne V0 produit par un générateur 15 d'une source de référence. La sortie du circuit comparateur 14 est reliée à la grille de commande du transistor 11. Le transistor 11 pourrait néanmoins être un transistor bipolaire.

L'appareil 8 comporte par ailleurs, dans le cas d'un téléphone mobile un circuit d'amplification 16 relié à un aérien et à un circuit de réception 17, lui-même également relié fonctionnellement au circuit de traitement 9. Les circuits 16, 17 et 9 reçoivent des signaux de commande en provenance d'un microprocesseur 18 cadencé dans une horloge 19. D'une manière connue, le microprocesseur 18 comporte un séquenceur ou une machine d'état susceptible de produire des ordres OT de mise en service de l'amplificateur 16, du circuit de réception 17 et du circuit de traitement 9. Dans l'invention, par anticipation à la date T d'application de l'ordre OT, le séquenceur ou la machine d'état du microprocesseur 18 seront capables de produire les ordres OT' vus ci-dessus de mise en service du circuit de régulation 10. Dans la variante préférée l'ordre OT' est appliqué au générateur 15 qui applique alors une autre valeur de consigne V1 sur la deuxième entrée de commande du comparateur 14. Autant V0 impose Vr autant V1 impose Vr+.

Il est possible que les traitements du circuit 9 puissent être de différentes natures. Dans ce cas l'appareil 8 comportera plusieurs circuits, par exemple les circuits 20 et 21 comparables au circuit 9. Il est possible que tous ces circuits 20 et 21 ne soient pas sollicités en même temps que le circuit 9. S'ils sont sollicités en même temps, un seul circuit de régulation 10 peut suffire à l'alimentation électrique de tous ces circuits. Par contre, s'ils sont sollicités indépendamment les uns des autres, il est préférable de réaliser des circuits de régulation dédiés en duplication respectivement 22 et 23. En agissant ainsi la surconsommation provoquée dans les circuits 10 ou 22 ou 23 entre les ordres OT' et OT sera uniquement limitée aux circuits 9, 20 et 21 respectivement qui sont effectivement en service.

La figure 2 montre encore schématiquement qu'avec l'invention on peut se passer d'un gros condensateur 24 dont le rôle était d'assurer la décroissance amortie 4 du deuxième diagramme temporel vu ci-dessus. De ce fait on gagne en coût et en place.

Dans la représentation de la figure 2, les circuits d'amplification 17 et de réception 16 qui sont des circuits analogiques peuvent ne pas avoir besoin d'une stabilisation aussi rigoureuse de leur tension d'alimentation. Leur sensibilité à cette tension est moins critique. En conséquence ils peuvent être branchés à la batterie 12 directement sans passer par un circuit de régulation 10. De préférence le circuit de régulation 10 comportera alors un condensateur 25 monté en parallèle entre la masse et la sortie du circuit 10. Le condensateur 25 n'a pas besoin d'être très gros : un condensateur de l'ordre de 10 µF peut suffire dans le cadre de la téléphonie mobile.

Finalement on observe qu'en agissant avec le procédé de l'invention on est capable d'assurer une bonne régulation et un bon traitement des signaux, même lorsque la batterie est proche de sa fin d'autonomie parce qu'on est capable de déplacer les instants auxquels une chute de tension due à la mise en service de la régulation se produit, à une date différente de celle à laquelle la tension régulée est utile.

## Revendications

1. Procédé d'alimentation électrique d'un circuit (9) de traitement numérique dans un appareil (8) mobile comportant un circuit de régulation (10) dans lequel
- on mesure (13) une tension d'alimentation (Vr) de ce circuit de traitement,
- on compare (14) cette tension d'alimentation à une référence (V0), et
- on régule (11) cette tension d'alimentation en fonction d'un écart entre ladite tension d'alimentation mesurée et cette référence **caractérisé en ce que**
- on repère temporellement une date prévisible (T) d'une d'augmentation d'une consommation du circuit de traitement et
- on augmente, par anticipation (T'), c'est-à-dire à une date antérieure à ladite date prévisible, la tension d'alimentation (Vr+) du circuit de traitement.

2. Procédé selon la revendication 1, **caractérisé en ce que** pour augmenter la tension d'alimentation, on change la valeur de la référence (VO, V1) à ladite date antérieure (T').

3. Procédé selon la revendication 1, **caractérisé en ce que** pour augmenter la tension d'alimentation,
on provoque ladite date antérieure une augmentation d'une consommation électrique sur un circuit dissipatif relié en sortie du circuit de régulation (10).

4. Procédé selon la revendication 1 à 3, **caractérisé en ce que**
- on répartit le circuit de traitement en plusieurs circuits séparés (9, 20, 21) alimentés individuellement,
- on repère temporellement une date prévisible d'une d'augmentation d'une consommation d'un circuit séparé, et
- on augmente, par anticipation (T'), c'est-à-dire à une date antérieure à ladite date prévisible la tension d'alimentation (Vr+) de ce circuit séparé.

5. Appareil mobile muni d'un circuit (9) de traitement numérique et d'un dispositif (10, 12, 18, 19) d'alimentation électrique de ce circuit de traitement numérique, ce dispositif d'alimentation électrique comportant un circuit de régulation (10) d'une tension d'alimentation (Vr) de ce circuit de traitement (9) à une valeur de référence (V0), **caractérisé en ce que** l'appareil mobile comporte
- un circuit de prédiction (18, 19) pour prédire une date (T) d'une augmentation d'une consommation du circuit de traitement et
- des moyens pour augmenter, par anticipation (T'), c'est-à-dire à une date antérieure à ladite date prévisible, la tension d'alimentation (Vr+) du circuit de traitement numérique.

6. Appareil mobile selon la revendication 5, **caractérisé en ce que** le circuit de prédiction comporte un circuit séquenceur ou une machine d'état (18), et une horloge (19) pour activer ce séquenceur ou cette machine d'état.

7. Appareil mobile selon la revendication 5 ou 6 **caractérisé en ce que** les moyens pour augmenter la tension d'alimentation comportent un générateur (15) de signaux de référence relié à une entrée de consigne du circuit de régulation pour générer la valeur de référence, ce générateur de signaux de référence étant muni d'une entrée de pilotage pour être piloté par le circuit de prédiction, et est adapté à changer la valeur de référence (V0, V1) à ladite date antérieure (T').

8. Appareil mobile selon la revendication 5 ou 6 **caractérisé en ce que** les moyens pour augmenter la tension d'alimentation comportent un circuit dissipatif relié en sortie du circuit de régulation (10), qui est adapté à provoquer à ladite date antérieure une augmentation d'une consommation électrique.

9. Appareil mobile selon la revendication 5 à 8 **caractérisé en ce que** le circuit de régulation comporte plusieurs unités de régulation (10, 22, 23) dédiés à des circuits de traitement (9, 20, 21) différents.

10. Appareil mobile selon la revendication 5 9 **caractérisé en ce que** le circuit de régulation comporte un condensateur (25) avec une capacité de l'ordre de 10 µF en sortie.

## Claims

1. Method of supplying electrical power to a digital processor circuit (9) in a mobile appliance (8) including a regulator circuit (10), in which method:
- a supply voltage (Vr) of the processor circuit is measured (13),
- this supply voltage is compared (14) to a reference (V0), and
- this supply voltage is regulated (11) as a function of an offset between said measured supply voltage and said reference, **characterised in that**:
- a predictable time (T) of an increase in power consumption by the processor circuit is identified in time, and
- the supply voltage (Vr+) of the processor circuit is increased in advance, i.e. at a time (T') earlier than said predictable time.

2. Method according to claim 1, **characterised in that** to increase the power supply voltage the value of the reference (V0, V1) is changed at said earlier time (T').

3. Method according to claim 1, **characterised in that** to increase the supply voltage, before said earlier time, there is caused an increase in electrical power consumption by a dissipative circuit connected to the output of the regulator circuit (10).

4. Method according to claim 1 to 3, **characterised in that**
- the processor circuit is divided into a plurality of separate circuits (9, 20, 21) supplied with power individually,
- a predictable time of an increase in the power consumption of a separate circuit is identified in time, and
- the supply voltage (Vr+) of this separate circuit is increased in advance, i.e. at a time (T') earlier than said predictable time.

5. Mobile appliance provided with a digital processor circuit (9) and a device (10, 12, 18, 19) for supplying electrical power to said digital processor circuit, this electrical power supply device including a circuit (10) for regulating a power supply voltage (Vr) of this processor circuit (9) to a reference value (V0), **characterised in that** the mobile appliance includes
- a predictor circuit (18, 19) for predicting a time (T) of an increase in the power consumption of the processor circuit, and
- means for increasing the supply voltage (Vr+) of the digital processor circuit in advance, i.e. at a time (T') earlier than the predictable time.

6. Mobile appliance according to claim 5, **characterised in that** the predictor circuit includes a sequencer circuit or a state machine (18) and a clock (19) for activating this sequencer or this state machine.

7. Mobile appliance according to claim 5 or 6, **characterised in that** the means for increasing the power supply voltage include a reference signal generator (15) connected to a set point input of the regulator circuit to generate the reference value, this reference signal generator having a control input for it to be controlled by the predictor circuit, and is adapted to change the reference value (V0, V1) at said earlier time (T').

8. Mobile device according to claim 5 or 6 **characterised in that** the means for increasing the supply voltage include a dissipative circuit connected to the output of the regulator circuit (10) that is adapted to bring about at said earlier time an increase in an electrical power consumption.

9. Mobile appliance according to claims 5 to 8, **characterised in that** the regulator circuit includes a plurality of regulator units (10, 22, 23) dedicated to different processor circuits (9, 20, 21).

10. Mobile device according to claim 5 9, **characterised in that** the regulator circuit includes an output capacitor (25) with a capacitance of the order of 10 µF.

## Patentansprüche

1. Verfahren für die elektrische Versorgung einer digitalen Verarbeitungsschaltung (9) in einem beweglichen Apparat (8), beinhaltend einen Regelkreis (10), bei dem
- man eine Versorgungsspannung (Vr) dieser Verarbeitungsschaltung misst (13),
- man diese Versorgungsspannung mit einer Referenz (V0) vergleicht (14), und
- man diese Versorgungsspannung in Abhängigkeit von einem Abstand zwischen dieser gemessenen Versorgungsspannung und dieser Referenz regelt (11), **dadurch gekennzeichnet, dass**
- man zeitlich einen voraussehbaren Zeitpunkt (T) einer Zunahme eines Verbrauchs der Verarbeitungsschaltung ermittelt, und
- man durch Vorwegnahme (T'), das heißt zu einem früheren Zeitpunkt als diesem voraussehbaren Zeitpunkt, die Versorgungsspannung (Vr+) der Verarbeitungsschaltung erhöht.

2. Verfahren gemäß Anspruch 1, **dadurch gekennzeichnet, dass** man zwecks Erhöhung der Versorgungsspannung den Wert der Referenz (VO, V1) zu diesem früheren Zeitpunkt (T') ändert.

3. Verfahren gemäß Anspruch 1, **dadurch gekennzeichnet, dass** man zwecks Erhöhung der Versorgungsspannung zu diesem früheren Zeitpunkt eine Erhöhung eines elektrischen Verbrauchs auf einer Dissipationsschaltung bewirkt, die am Ausgang des Regelkreises (10) angeschlossen ist.

4. Verfahren gemäß Anspruch 1 bis 3, **dadurch gekennzeichnet, dass**
- man die Verarbeitungsschaltung auf mehrere getrennte Schaltungen (9,20,21) verteilt, die einzeln versorgt werden,
- man zeitlich einen vorhersehbaren Zeitpunkt einer Erhöhung eines Verbrauchs einer getrennten Schaltung ermittelt, und
- man durch Vorwegnahme (T'), das heißt zu einem früheren Zeitpunkt als diesem vorhersehbaren Zeitpunkt die Versorgungsspannung (Vr+) dieser getrennten Schaltung erhöht.

5. Beweglicher Apparat, der mit einer digitalen Verarbeitungsschaltung (9) und mit einer Vorrichtung (10, 12, 18, 19) zur elektrischen Versorgung dieser digitalen Verarbeitungsschaltung ausgestattet ist, wobei diese elektrische Versorgungsvorrichtung einen Kreis (10) zur Regelung einer Versorgungsspannung (Vr) dieser Verarbeitungsschaltung (9) auf eine Führungsgröße (V0) enthält, **dadurch gekennzeichnet, dass** der bewegliche Apparat folgendes beinhaltet:
- eine Vorhersageschaltung (18, 19) zum Vorhersagen eines Zeitpunkts (T) einer Erhöhung eines Verbrauchs der Verarbeitungsschaltung, und
- Mittel, um durch Vorwegnahme (T'), das heißt zu einem früheren Zeitpunkt als diesem vorhersehbaren Zeitpunkt die Versorgungsspannung (Vr+) der digitalen Verarbeitungsschaltung zu erhöhen.

6. Beweglicher Apparat gemäß Anspruch 5, **dadurch gekennzeichnet, dass** die Vorhersageschaltung eine Folgeschalterschaltung oder eine Statusmaschine (18) einschließt, und eine Uhr (19), um diesen Folgeschalter oder diese Statusmaschine zu aktivieren.

7. Beweglicher Apparat gemäß Anspruch 5 oder 6, **dadurch gekennzeichnet, dass** die Mittel zum Erhöhen der Versorgungsspannung einen Generator (15) für Referenzsignale enthalten, der an einen Sollwerteingang des Regelkreises angeschlossen ist, um die Führungsgröße zu generieren, wobei dieser Referenzsignalgenerator mit einem Steuerungseingang versehen ist, um von der Vorhersageschaltung gesteuert zu werden, und geeignet ist, die Führungsgröße (V0, V1) zu diesem früheren Zeitpunkt (T') zu ändern.

8. Beweglicher Apparat gemäß Anspruch 5 oder 6, **dadurch gekennzeichnet, dass** die Mittel zum Erhöhen der Versorgungsspannung eine Dissipationsschaltung enthalten, die am Ausgang des Regelkreises (10) angeschlossen ist, der geeignet ist, zu diesem früheren Zeitpunkt eine Erhöhung eines elektrischen Verbrauchs zu bewirken.

9. Beweglicher Apparat gemäß Anspruch 5 bis 8, **dadurch gekennzeichnet, dass** der Regelkreis mehrere Regeleinheiten (10, 22, 23) enthält, die für verschiedene Verarbeitungsschaltungen (9, 20, 21) dediziert sind.

10. Beweglicher Apparat gemäß Anspruch 5 bis 9, **dadurch gekennzeichnet, dass** der Regelkreis einen Kondensator (25) mit einer Kapazität in der Größenordnung von 10 µF am Ausgang einschließt.
